## Europäisches Patentamt
## European Patent Office
## Office européen des brevets

(19)

(11) Publication number: **0 092 952**
**A1**

(12) # EUROPEAN PATENT APPLICATION

(21) Application number: **83302173.6**

(22) Date of filing: **18.04.83**

(51) Int. Cl.³: **B 62 D 53/00**
**B 62 D 13/00**

(30) Priority: **19.04.82 GB 8211267**

(43) Date of publication of application:
**02.11.83 Bulletin 83/44**

(84) Designated Contracting States:
**BE DE FR GB NL SE**

(71) Applicant: **Sir Rupert Edward MANN & Lady Mary Rose MANN**
**(trading as Thelveton Farms) Hill House**
**Dickleburgh Diss Norfolk(GB)**

(72) Inventor: **McLellan, Gavin c/o Sir Rupert Edward Mann**
**&**
**Lady Mary Rose Mann (trading as Thelveton Farms)**
**Billingford Hall Diss Norfolk(GB)**

(74) Representative: **Paget, Hugh Charles Edward et al,**
**MEWBURN ELLIS & CO. 2/3 Cursitor Street**
**London EC4A 1BQ(GB)**

(54) **Land vehicle.**

(57) An articulated land vehicle has two carriages (1, 2) each with four wheels (3a, b, c, d.) All the wheels are driven. The steering control controls the angle between the carriages (1, 2) and the attitude of the outer pair of wheels (3a, d) of each carriage (1, 2). By steering both carriages each pair of wheels substantially follows the preceding pair around corners, rather than cutting in as an unsteered trailer will. Preferably each wheel is driven by a respective hydraulic motor (13).

This construction is useful for farm vehicles. It allows a low ground pressure vehicle to carry a relatively large load, and because the wheels stay in line around corners the amount of crop flattened by the vehicle is minimised.

FIG.2

EP 0 092 952 A1

"Land Vehicle"

This invention relates to a land vehicle, more particularly a low ground pressure vehicle, i.e. a vehicle which exerts a low pressure on ground at the ground contact areas. Such vehicles are especially useful in agriculture, where it is often desired to drive a vehicle, e.g. a spraying or fertiliser distributing vehicle, over soft and uneven ground, and even over crop bearing ground.

Special tyres which have a large tread area are well known for use on low ground pressure vehicles. Alternatively more than two tyres on a single axis are used. Problems remain of distributing the load of the vehicle over the various tyres and of achieving adequate drive, bearing in mind that driven wheels tend to slip on soft ground. It is of course known to drive all wheels of an agriculture vehicle, in order to overcome this last problem.

A further problem is to accommodate a relatively heavy load, such as a spraying tank which is needed on a spraying vehicle. There is a known vehicle of very low ground pressure, which can only carry 50 to 100 gallons (225 to 450 litres) of spraying solution. This is not enough for a conveniently large area to be sprayed without refilling the tank. A tanks of 300 gallons (1350 litres) would be much more convenient. If the laden weight of so large a tank is to be supported, there must be more than the normal four wheels. However, if a large number of axles is provided one behind the other, the problems of steering increase, since, particularly on crop bearing and other soft ground, it is highly undesirable for any wheels to be taken round a corner while being dragged transversely to their axis (as will occur for instance with a six-wheeled vehicle when only one pair of wheels is steered).

If the additional load is put on a trailer, then (a) the (undriven) wheels of the trailer tend to sink into the ground more because they do not have the tendency to pull themselves up out of a rut that driven wheels have, and (b) the wheels of the trailer will "cut in" on corners, increasing the number of tracks and so the area of compacted soil left by the vehicle. We have realised that these problems can be ameliorated or eliminated by providing a steered and driven trailer. This permits an especially effective compromise to be made between the weight which the vehicle can carry and the amount of damage it will do to crops and soft ground.

According to the present invention there is provided a land vehicle comprising first and second carriages, each having at least four ground-contacting wheels and each being articulatedly connected to the other for relative pivoting about a normally vertical axis, the four wheels on each carriage being driven, preferably by means of hydraulic motors, and the pair of wheels closer to the end of the vehicle on each carriage being steerable, wherein the steering attitude of the two steerable pairs of wheels and the relative pivoting position of the two carriages about the said vertical axis are controllable in conjunction by the driver through his steering control.

Preferably an independent suspension is provided for each wheel.

Preferably the two carriages are connected for relative pivoting about three mutually perpendicular axes (including the said vertical axis).

Through his steering control, e.g. a steering wheel, the driver controls the degree of turn of the steerable wheels in dependence upon the relative degree of pivoting of the two carriages about the vertical axis. In this way, the vehicle is steerable round a corner in such a manner that, if the wheels on each side of the vehicle are all aligned when the vehicle is travelling straight, they follow substantially the same path around the corner.

The front vehicle may carry the driver's cab, the primary power source, e.g. a diesel engine, which drives the main hydraulic pump providing the pressurised hydraulic fluid for the hydraulic motors driving the wheels. The steering is preferably also hydraulically operated. The rear carriage is then available entirely for the apparatus to carry out the function of the vehicle, e.g. a tank for spraying liquid, a pump for the liquid, and spraying booms, or a hopper and distribution means for dry material such as fertiliser.

A specific embodiment of the invention will now be described by way of example with reference to the accompanying drawings, in which:-

Fig. 1 is a schematic side view of a land vehicle embodying the invention;

Fig. 2 is a schematic plan view of the vehicle of Fig. 1, particularly showing the steering arrangement; and

Fig. 3 is a detail view of one wheel and its suspension, in the vehicle of Fig. 1.

The illustrated embodiment is a land vehicle intended for agricultural use, and is capable of traversing soft and uneven ground, while carrying a considerable load. The vehicle has two carriages 1,2 each having a frame 1a,2a and mounted on four driven wheels 3a,3b,3c,3d arranged in two pairs of two axes, the track width of all four pairs being identical. Thus all wheel are driven. Each wheel has its own independent suspension 4 consisting of two wish-bone members 5,6 one above the other and attached respectively to the top and bottom of the motor housing (described below) and a combined spring and a shock absorber 7 connected at its outer end to the upper wish-bone. Each wishbone is attached at the inner ends of its two arms to the frame of the carriage, for pivoting about a horizontal axis. Each wheel has a wide tread tyre 14 of known type, suitable for operation on soft ground. The suspensions of the four non-steered wheels (3b,3c) each have a stabilizing bar 7a connected between the carriage frame and the motor housing.

The front carriage 1 carries a cab 8, containing a driver's seat 9 and a steering wheel 10 and the other necessary controls (not shown). It also carries a diesel engine 11 which drives a hydraulic pump 12 (or if desired more than one hydraulic pump).

The suspension 4 for each wheel carries, at its outer end, a hydraulic motor 13, on whose output shaft the wheel is mounted. Connections 15 (not shown in detail) between the main hydraulic pump 12 and the drive motor 13 for each wheel, together with suitable controls, allow each wheel to be driven with substantially equal power. Forward and reverse drive of each wheel is possible. Flow regulators are provided in the supply lines to the individual motors, in order to prevent a single slipping wheel from accepting an excessive amount of hydraulic fluid from the pump and thereby withdrawing power from the other wheels.

The hydraulic motors 13 are shown axially spaced from the wheels for the sake of clarity. We have found that in practice it is desirable to place the hydraulic motors 13 at least partially within the wheels to bring the point of contact between the wheel and the ground under the portion of the hydraulic motor's shaft between the shaft bearings in the motor housing, or at least not far removed from under this portion. This minimises the tendency of the shaft to twist out of true at the bearings, which twisting tends to disrupt the hydraulic seal.

The front and rear carriages 1,2 are coupled together at a connection generally indicated by 16 for relative pivoting about a vertical axis (i.e. an axis which is vertical when the vehicle is on level ground). Additionally, the connection 16 permits relative pivoting of the two carriages about a horizontal axis (i.e. an axis which is horizontal when the vehicle is on level ground) parallel to the direction of travel of the vehicle and about a horizontal axis perpendicular to the direction of travel of the vehicle. Thus the two carriages 1,2, can pivot relatively about three mutually perpendicular axes. This is an important feature which permits the vehicle to travel easily over uneven ground without imposing large strains on its frame and suspension, although the vehicle is relatively long. Relative pivoting about the two horizontal axes is not controlled, except by limit stops, but the relative pivoting about the vertical axis is controlled by the driver through the steering wheel 10 of the vehicle. The steering wheel 10 also controls the steering attitude of the four outermost wheels of the vehicle (i.e. the endmost pairs 3a,3d), these being the four steerable wheels. The two wheels of each outermost pair 3a,3d are connected together by a tracking arm 17,18 so that they are steered together. The wheels 3a,3d are illustrated as being connected by a suitable flexible coupling to the hydraulic motors 13. Alternatively, the hydraulic motors 13 may be mounted so as to be turned with the wheels, when the wheels are steered. The manner in which they are steered from the steering wheel and the control of the relatively pivoting about the vertical axis of the two carriages will now be described.

The rear carriage is connected in a manner described later to a vertical shaft 19 mounted in bearings 20 in the frame of the front carriage 1. The rotational position of this shaft 19 is controlled by two hydraulic rams 21 connected to opposite ends of a cross arm 22 mounted on this shaft. The bodies of the rams 21 themselves are mounted on the front carriage.

Mounted on and extending rearwardly from the vertical pivoting shaft 19 is the shaft 23 of a gimbal joint 24 whose body is in turn carried on a cross-shaft 25 extending across the rear carriage 2 and mounted in bearings 26 at its end in the frame of the rear carriage. The gimbal joint 23,24 allows relative rotation of the front and rear carriages about a horizontal axis extending parallel to the direction of movement of the vehicle, and the cross shaft 25 allows their relative pivoting about an axis extending transversely of the vehicle.

Operation of the rams 21 to rotate the shaft 19 thus causes the rear carriage to turn relative to the front carriage (this of course being possible only when the vehicle is in motion).

Also connected to one side of the cross arm 22 is a steering rod 27, for the front pair of steerable vehicles, which at its other end is connected via a bell-crank 28 to the tracking arm 17 for the front wheels 3a. The steering of the rear wheels 3d is achieved by means of two Bowden cables 29, connected at their ends to the respective ends of the cross arm 22 and at their other ends to an arm 30 which controls a hydraulic ram 31 which moves the tracking arm 18 to effect steering of the rear wheels 3d. The hydraulic ram 31 steer the wheels 3d in the manner of a power steering system of a vehicle, so that the action of the Bowden cables 29 is essentially to provide the control for the steering of the rear wheels.

In this way, the steering of the outer pairs of wheels 3a,3d and of the rear carrriage relative to the front carriage is controlled by a single movement of the steering wheel 10. Operation of the steering wheel causes hydraulic fluid to be fed to the steering rams 21, which then pivot the front carriage relative to the rear carriage and at the same time cause the front and rear wheels to turn. The vehicle is thus constrained to follow a path almost as though it were on rails. The turning circle can be small, e.g. about 10 metres in a vehicle of about 6 metres length, and this is highly advantageous in an agricultural vehicle which is required to make parallel passes across a field. When the vehicle is steered round a corner, none of the wheels are dragged sideways, which avoids damage to land.

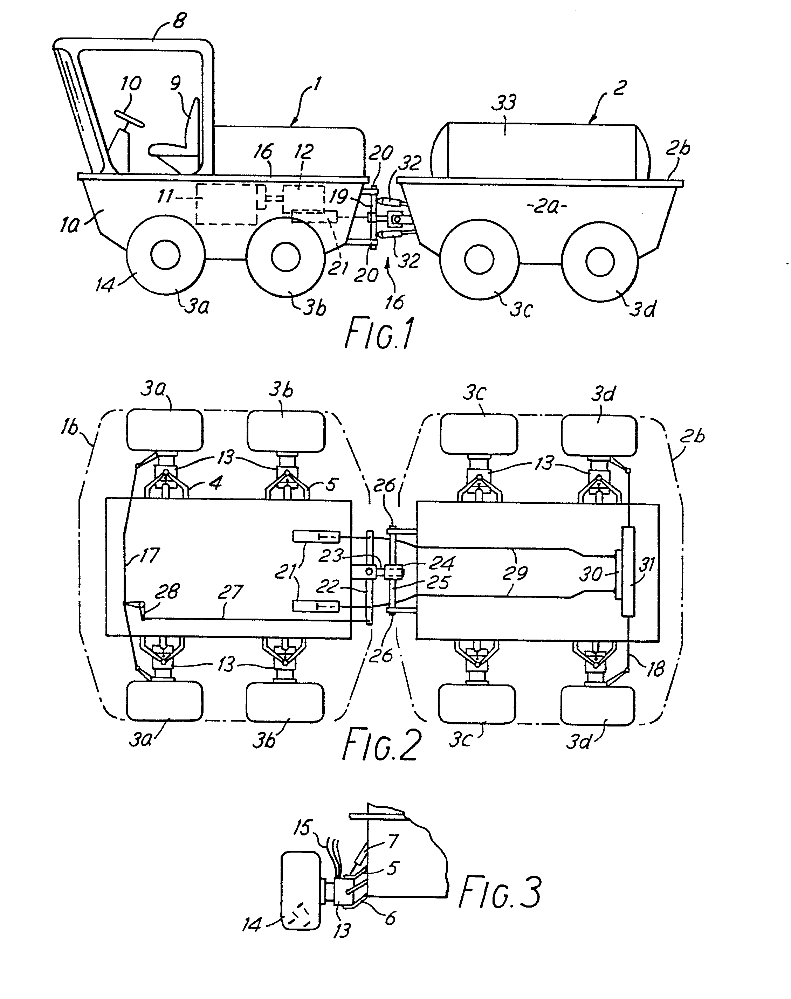

Two shock absorbers 32 not shown in Fig. 2 are connected between the shaft 19 and the frame of the rear vehicle 2, in order to control the relative pivoting of the front and rear carriages about the horizontal transverse axis. This prevents an oscillation of the two carriages about this axis. Each carriage has a deck 1b,2b.

At least one pair of wheels, preferably a non-steered pair of wheels, is preferably provided with a conventional disc brake system, and the hydraulic drive can also be used for braking.

The front carriage 1, having the weight of the diesel engine and of the hydraulic pump and the hydraulic controls, does not have capacity for additional load, in order to avoid the risk of placing too great a pressure on the ground. The rear carriage 2 carries the loads (and in this embodiment also carries the fuel tank for the diesel engine). For example, a spraying tank 33 (e.g. of 300 gallon capacity) can be mounted on the rear carriage together with a pump (not shown) for the sprayed liquid and conventional booms (not shown) for mounting the sprays. The spraying system can be a conventional system though the capacity of the tank is larger than in many conventional vehicles, in which a low ground pressure is sought. The spraying system can be made removable, e.g. as a unit, and can be replaced by an alternative apparatus, e.g. a hopper and distribution system for dry material such as fertiliser.

Since the vehicle has eight ground-contacting wheels, it is able to carry a considerable load, while avoiding ground pressure of more than 5 to 8 lbs. per square inch (approx. $3.5 \times 10^4$ to $5.5 \times 10^4$ $Nm^{-2}$). Depending on the load, the ground pressure may be as low as $3\frac{1}{2}$ lbs. per square inch (approx. $2.5 \times 10^4$ $Mn^{-2}$).

The use of hydraulic motors and of independent suspension for each wheel allows the vehicle to be constructed in a simple manner, and yet be relatively robust. Maintenance is minimal.

The use of a separate hydraulic motor for each wheel means that there are no axles running across the vehicle. This permits a relatively high ground clearance for the vehicle bodies, and if large diameter wheels are fitted the vehicle can be driven over essentially fully grown crops without the portion passing beneath the body of the vehicle suffering much damage.

CLAIMS

1.        A land vehicle comprising first and second carriages (1,2) articulatedly connected to the other for relative pivoting about a normally vertical axis (20) and each having at least four ground contacting driven wheels (3a,b,c,d), the pair of wheels (3a,3d) closer to the respective end of the vehicle on each carriage being steerable, the steering attitude of the two steerable pairs of wheels (3a,3d) and the relative pivoting position of the two carriages (1,2) about the said vertical axis being controllable in conjunction by the driver through his steering control (10).

2.        A vehicle according to claim 1 wherein one (1) of said carriages has a storage tank (33) for liquid to be sprayed on land traversed by the vehicle.

3.        A vehicle according to claim 2 wherein the other (2) of said carriages has a power source (11) for providing power to drive said wheels and a seat (9) and the steering control (10) for the driver.

4.        A vehicle according to any one of claims 1 to 3 in which the wheels (3a,b,c,d) are driven by hydraulic motors.

5.        A vehicle according to claim 4 in which each wheel is driven by a respective hydraulic motor (13).

6.       A vehicle according to any one of the preceding claims in which an independent suspension (5,6,7) is provided for each wheel (3a,b,c,d).

7.       A vehicle according to any one of the preceding claims in which the carraiges (1,2) are connected to each other for relative pivoting about two additional axes (22,23), the additional axes normally being substantially perpendicular to each other and both normally being substantially perpendicular to the said normally vertical axis (20).

8.       A vehicle according to claim 7 in which the connection between the carriages includes a gimbal join (24).

9.       A vehicle according to any one of the preceding claims in which a hydraulic piston arrangement (21) controls the angle about the said normally vertical axis (20) between the first and second carriages (1,2), the driver's steering control acting on the hydraulic piston arrangement, and in which the steering attitude of the said two steerable pairs of wheels is controlled by the angle about the said normally vertical axis between the carriages.

10.        A vehicle according to claim 9 in which the hydraulic piston arrangement (21) is mounted on a first one of the carriages (1) and is linked to a cross-member (22) pivotable around the said normally vertical axis (20) with the other carriage (2), the angle between the first carriage and the cross-member determining the steering attitude of the pair of steerable wheels (3a) on the first carriage (1) via a direct mechanical linkage (17,27) and determining the steering attitude of the pair of steerable wheels (3d) on the other carriage (2) via a cable arrangement (29) which acts on a hydraulic steering means (31) for the said pair of steerable wheels on the second carriage.

1/1    0092952

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 353 618 (FISHER)<br>* Claims 1,2; figures 1,4-6,7 * | 1 | B 62 D 53/00<br>B 62 D 13/00 |
| A | * Column 3, lines 30-33; column 4, lines 26-28; figure 1 * | 3 | |
| A | * Column 3, lines 62-69 * | 7 | |
| Y | GB-A- 607 293 (BLANCHARD)<br>* Claim 1; figure 1 * | 1 | |
| A | US-A-3 376 945 (KAPRELIAN et al.)<br>* Claim 5 * | 4,5 | |
| A | * Column 3, lines 58-64 * | 9 | |
| A | FR-A-1 493 241 (LOCKHEED)<br>* Page 5, column 2, last 4 lines; figure 4 * | 6 | |
| A | US-A-3 653 687 (FORSYTH et al.)<br>* Whole document * | 8 | |

TECHNICAL FIELDS SEARCHED (Int. Cl. ³)

A 01 M 7/00
B 60 K 17/00
B 60 P 3/00
B 62 D 13/00
B 62 D 53/00
B 62 D 55/00
B 62 D 59/00
B 62 D 61/00

--- -/-

The present search report has been drawn up for all claims

| Place of search | Date of completion of the search | Examiner |
|---|---|---|
| THE HAGUE | 25-07-1983 | OSBORNE J. |

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 174 493  (VANDERWERF)<br>*  Page 2, column 2, lines 70-75; figures 1,2 * | 9,10 | |
| A | FR-A-  549 637  (CHOTIAU)<br>*  Page 2, column 1, lines 25-30; figure 4 * | 10 | |
| A | GB-A-2 016 252  (COLLIN) | | |

TECHNICAL FIELDS SEARCHED (Int. Cl. ³)

The present search report has been drawn up for all claims

| Place of search | Date of completion of the search | Examiner |
|---|---|---|
| THE HAGUE | 25-07-1983 | OSBORNE J. |